(19) Europäisches Patentamt
European Patent Office
Office européen des brevets

(11) Publication number: **0 595 356 A2**

(12) **EUROPEAN PATENT APPLICATION**

(21) Application number: **93117613.5**

(51) Int. Cl.5: **C09D 5/44**

(22) Date of filing: **29.10.93**

(30) Priority: **30.10.92 JP 292606/92**

(43) Date of publication of application:
**04.05.94 Bulletin 94/18**

(84) Designated Contracting States:
**DE FR GB**

(71) Applicant: **NIPPON PAINT CO., LTD.**
**1-2, Oyodokita 2-chome**
**Oyodo-ku**
**Osaka-shi Osaka-fu(JP)**

(72) Inventor: **Ishiwata, Satoshi**
**5-1-301, Shinkamata 1-chome,**
**Ota-ku**
**Tokyo-to(JP)**
Inventor: **Ukita, Tsuneo**
**22-8-10, Nozawa 3-chome,**
**Setagaya-ku**
**Tokyo-to(JP)**
Inventor: **Murata, Katsumi**
**520-24, Akiba-cho,**
**Totsuka-ku**
**Yokohama-shi, Kanagawa-ken(JP)**

(74) Representative: **Hansen, Bernd, Dr.**
**Dipl.-Chem. et al**
**Hoffmann, Eitle & Partner,**
**Patentanwälte,**
**Arabellastrasse 4**
**D-81925 München (DE)**

(54) **Cationic electrocoating composition.**

(57) The present invention provides a cationic electrodeposition paint composition having preferred corrosion-proofing effect at the end face of steel sheet. The cationic electrocoating composition comprises:

(A) 20 to 70 wt% of a cationic non-gelled resin obtained by neutralizing with acid a reaction product of a polyepoxide and a polyoxyalkylene polyamine in an equivalent ratio of epoxy group In the polyepoxide against amine group in the polyoxyalkylene polyamine being within the range of 1:1.15 to 1.60,

(B) 10 to 65 wt% of a cationic resin other than said cationic non-gelled resin (A), and

(C) 10 to 50 wt% of a blocked polyisocyanate having a dissociation temperature of 100 to 140 °C; the wt% being based on the total solid content.

EP 0 595 356 A2

## FIELD OF THE INVENTION

The present invention relates to a cationic electrocoating composition. More particularly, it relates a cationic electrocoating composition which provides a coating having excellent corrosion resistance, especially at an edge of an article to be coated.

## BACKGROUND OF THE INVENTION

Hitherto, cationic electrocoating paint is applied to cars, electric appliance and other articles made from steel in order to provide corrosion resistance. What is an important feature to the electrocoating paint is corrosion resistance, especially at an edge portion of an article to be electrocoated.

In order to impart good edge corrosion resistance, it is proposed that fusion viscosity of an electrodeposited coating during baking process raises sufficient to suppress heat fluidity of the coating, whereby slipping off of the coating at the edge portion of the coated article is effectively prevented so as to remain covered by the coating. Thus, the electrocoated coating imparts excellent edge corrosion resistance and this method is practically used in some application. For example, there are proposed a method wherein a content of pigment in the electrocoating paint effectively increases, or a method wherein micro resin particles are formulated into the electrocoating paint.

However, these methods all increase heat fluidity of the coating so much that the smoothness of the coating is adversely affected.

## SUMMARY OF THE INVENTION

The objective of the present invention is to provide a cationic electrocoating composition having excellent corrosion resistance even at an edge portion of an article to be coated, without substantially reducing the smoothness of the coating. The coating thus obtained also has effects to increase adhesion and wetting force to an intermediate coating or a top coating.

Accordingly, the present invention provide a cationic electrocoating composition comprising:

(A) 20 to 70 wt% of a cationic non-gelled resin obtained by neutralizing with acid a reaction product of a polyepoxide and a polyoxyalkylene polyamine in an equivalent ratio of epoxy group in the polyepoxide against amine group in the polyoxyalkylene polyamine being within the range of 1:1.15 to 1.60,

(B) 10 to 65 wt% of a cationic resin other than said cationic non-gelled resin (A), and

(C) 10 to 50 wt% of a blocked polyisocyanate having a dissociation temperature of 100 to 140 °C; the wt% being based on the total solid content.

## DETAILED DESCRIPTION OF THE INVENTION

The reaction product of a polyepoxide and a polyoxy-alkylene polyamine is disclosed in Japanese Kokai Publication Hei 1(1989)-19696. For instance, the Japanese Kokai Publication discloses a composition which comprises a non-gelled resin obtained by reacting (i) polyepoxide with (ii) polyoxyalkylene polyamine, and a cationic resin other than the above non-gelled resin.

However, the patent does not suggest that, when a blocked polyisocyanate having a dissociation temperature of 100 to 140 °C is formulated into the composition of the Japanese Publication, the resulting composition can provide excellent coating properties at the edge portion and significantly enhance corrosion resistance at an edge portion of steel plate. The Japanese patent also describes that an amount of the non-gelled resin may be maximum 40 wt% based on the total composition, but according to the present invention, excellent edge corrosion resistance is obtainable even when a content of the non-gelled resin (A) exceeds 40 wt%.

According to the present invention, the cationic electrocoating composition which contains the block polyisocyanate having a dissociation temperature of 100 to 140 °C is electrodeposited on a surface of an article to be coated, Thus surface tension of the paint film greatly decreasing less than an electrodeposited coating from conventional cationic electrocoating composition. As the result, slipping off of the coating at the edge portion of the coated article in the subsequent baking step is effectively prevented and the covering property of the coating at the edge portion of the coated article is greatly improved. Furthermore, since the composition contains the block polyisocyanate having a low dissociation temperature, it quickly cures. Since fusion viscosity does not excessively decreases, the coating properties of the edge portion maintains.

The present inventors have discovered that according to the above method the smoothness at the flat section of the coated article is superior to the one obtained by the conventional method which relies only on the increase of fusion viscosity of the coating.

The polyepoxides to be used for the non-gelled resin, i.e. the component (A) of the present invention, include a polyglycidyl ether of a polyvalent alcohol (e.g. ethylene glycol, diethylene glycol, triethylene glycol, 1,2-propylene glycol, 1,3-propylene glycol, 1,4-butylene glycol, 1,5-pentanediol, polyethylene glycol, polypropylene glycol etc. Particularly a polyglycidyl ether of polypropylene glycol is preferred. Other polyepoxides may be a polyglycidyl ether of polyphenol (such as, bisphenol A). These compounds may be prepared by etherification of epichlorohydrin or dichlorohydrin and polyphenol, in the presence of alkali. Examples of the polyphenols are bis(4-hydroxyphenyl)2,2-propane, 4,4'-dihydroxybenzophenone, bis(4-hydroxyphenyl)1,1-ethane, bis(4-hydroxyphenyl)1,1-isobutane, bis(4-hydroxy t-butylphenol)2,2-propane, bis-(2-hydroxynaphthyl)methane, 1,5-dihydroxynaphthylene, and the like.

These polyepoxide may be modified by the resin having functional groups which react with epoxy groups, such as hydroxy groups or carboxyl groups, in order to improve flexibility and adhesion. Most preferred is a dimer acid-modified polyepoxide. For the dimer acid, the one sold on the market which is obtained by polymerizing an unsaturated fatty acid may be used. It may contain a monomer acid and a trimer acid which may exist during the reaction step as impurities. A preferred ratio of equivalence of carboxyl group in the dimer acid as against the equivalent of epoxy group in the polyepoxide is 1.5 to 2.5:1, preferably 1.8 to 2.2:1. The polyepoxide has average one or more epoxy groups in one molecule and in particular the epoxide with epoxy group number of 2 is preferred.

An epoxy equivalent of the dimer acid modified polyepoxide is within the range of 500 to 5000, preferably 1000 to 3000. The dimer acid-modified polyepoxide of the present invention is usually obtained by mixing a polyepoxide and dimer acid, heating and reacting the mixture at a temperature of 80 to 200 °C in the absence of catalyst or in the presence of a small amount of a tertiary amine, etc.

The polyoxyalkylene polyamine to be used in the present invention is a diamine having the following structural formula:

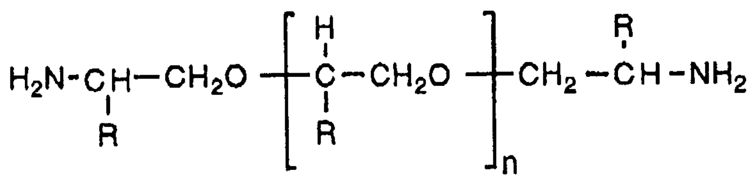

wherein R, which may be same or different, is selected from the group consisting of hydrogen and a lower alkyl group having 1 to 6 carbon atoms. n is an integral of about 1 to 30, preferably 1 to 20.

Many of such polyoxyalkylene polyamines are described in U.S. Patent, 3,236,895, column 2, lines 40 to 72. The method of preparation of the polyoxyalkylene polyamine is also described in Examples 4, 5, 6 and 8 to 12 in columns 4 to 9 of the aforesaid patent.

The polyoxyalkylene polyamines may contain mixed polyoxyalkylene groups, that is, more than two type of polyoxyalkylene groups. For instance, it may be a polyoxyethylene-propylene polyamine having the following structural formula:

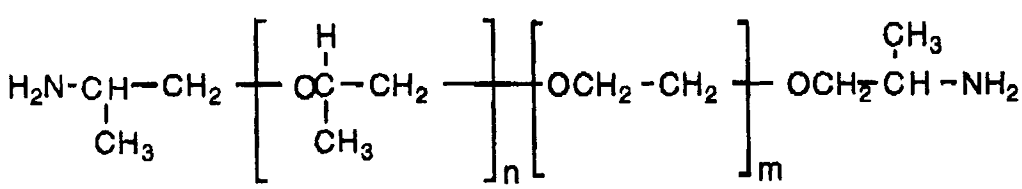

wherein n + m is 1 to 30, preferably 1 to 20, m is 1 to 29, preferably 1 to 19 and n is 1 to 22, preferably 1 to 15.

In addition to the above polyoxyalkylene polyamine, the derivative of polyoxyalkylene polyamine may also be used. Examples of the derivatives may be an aminoalkylene derivatives which are obtained by reacting the polyoxyalkylene polyamines with acrylonitrile and then hydrogenating the obtained reaction product. An example of an appropriate derivative may be the one with the following structural formula:

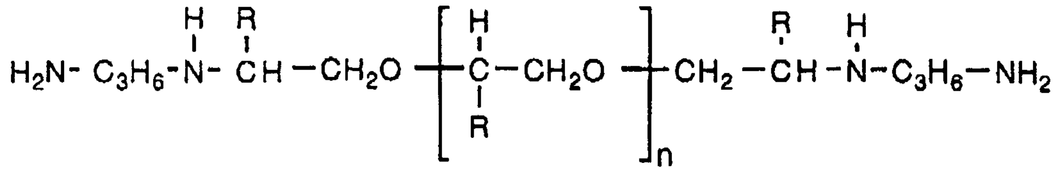

wherein R and n have the same as mentioned above.

The "polyoxyalkylene polyamines" to be actually used in the present invention means polyamines which contains one or more oxyalkylene groups and at least two amine groups, preferably primary amine groups per one molecule. Preferably, a number average molecular weight of the polyamine is within the range of 110 to 1,500 and an amine equivalent is within the range of 55 to 750. In terms of the equivalent, primary amine is regarded monofunctional.

It is preferred that the reaction is conducted with the ratio of equivalence of epoxy group in the polyepoxide and that of amine group in the polyoxyalkylene polyamine is within the range of 1:1.15 to 1.60, preferably 1:1.20 to 1.50. When the ratio of equivalence exceeds 1:1.60, low molecular weight products and free amines occur in excess amount and provide problems in corrosion resistance. When the ratio of equivalence is smaller than 1:1.15, gelation would occur. The reaction between polyepoxide and polyoxyalkylene polyamine is generally conducted at a reaction temperature of 50 to 180 °C, preferably 90 to 150 °C.

The reaction may be conducted in bulky condition or in the presence of solvent. The solvent shall be the one having no reactivity with the epoxide group or amine group under the given reaction conditions. The appropriate solvents include hydrocarbons, ethers, alcohols and ether alcohols. Preferably the solvent is water-soluble solvent such as monoglycol ether or glycol diether.

The reaction product of polyepoxide-polyoxyalkylene polyamine has essentially no epoxy functional value (i.e., it has epoxy equivalence of over 10000) and may be deemed to have amine, preferably primary amine functional value. The reaction product, when partially neutralized with an acid, can be dispersed in an aqueous medium.

The acid may be an organic acid such as formic acid, lactic acid and acetic acid, or an inorganic acid such as phosphoric acid. The range of neutralization varies by the respective reaction product.

The component (B) is a cationic resin used for cationic electrodeposition paint other than the above non-gelled resin.

The cationic resin (B) may be well-known, and can be epoxy based resin, polybutadiene-based resin, acryl-based resin, and the like. The cationic resin (B) may be an epoxy resin having active hydrogens, e.g. amino groups.

The epoxy resin may be a compound which has an average one or more epoxy groups per molecule, particularly more than two epoxy group number. Useful epoxy resins may include an epoxy resin obtained from bisphenol A and epichlorohydrin, or a polyglycidyl ether obtained from bisphenol F and epichlorohydrin or hydrogenated bisphenol A and epichlorohydrin. The epoxy resin obtained by the reaction of bisphenol A and epichlorohydrin is particularly preferred. Epoxydated polybutadiene resin may also be useful.

Other than the above, an acrylic polymer having epoxy groups is also usable. Such acrylic polymer is obtained by polymerizing monomers containing unsaturated epoxy group, for instance, glycidyl (meth)-acrylate, and one or more other polymerizable ethylenically unsaturated monomers. Examples of the polymers are disclosed in U.S. Patent 4,001,156, from column 3, line 59 to column 5, line 60.

A basic amino compound, which is used for producing the epoxy resin containing amino group as cationization agent, may be a primary amine, secondary amine, tertiary amine or either a polyamines or an alkanol amines. The preferred basic amine compound is diethylamine, dipropylamine, N-methylethanolamine, diethanolamine, ethylenediamine, diethylenetriamine, dimethylcyclohexylamine, dimethylethanolamine, diethylenetriamine, etc. When such polyamine as diethylene triamine is used, it is better to react beforehand its primary amino group with ketone (such as, acetone, methyl ethyl ketone, methyl isobutyl ketone) to convert it into ketimine derivatives. Ketimine production reaction proceeds easily by heating the mixture to over 100 °C and distilling the produced water. When tertiary amine having no active hydrogen is used, it is used after converting it into an acid-amine salt with an appropriate acid, for example, boric acid, phosphoric acid, sulfuric acid, acetic acid, lactic acid, etc.

The relative amount of mutually reacting amino compounds and epoxy resins varies according to the amount of cationic salt, for example, the desired amount of formation of the cationic base and the molecular

weight of the epoxy resin. The amount of formation of cationic base and the molecular weight of reaction product is so selected that a stable dispersion liquid is formed when the obtained cationic polymer is mixed with aqueous medium.

The reaction between these basic amino compounds and epoxy resins occurs even when mixed at a normal temperature, but in order to complete the reaction, it is preferred to heat the mixture to about 20 to 200 °C preferably at 50 to 150 °C for about 1 to 5 hrs.

The above-described reaction may be conducted and its reaction product are explained in the Japanese Kokai Patents. Sho 51(1976)-103135, Sho 55(1980)-32385, Sho 53(1988)-65327, Sho 53(1988)-65328, Sho 52(1977)-87498, etc.

The electrocoating composition of the present invention contains the blocked polyisocyanate (C) having a dissociation temperature of 100 to 140 °C.

The blocked polyisocyanate (C) may be separately present in the composition as a component other than the above or may be mixed or reacted with the non-gelled resin of component (A) or the cationic resin (B). In whichever state it may be, the technical effect of the present invention is sufficiently exhibited. However, since in the present invention, a blocked polyisocyanate having a dissociation temperature of 100 to 140 °C is used, it is preferred to either mix it without reacting it with components (A) and (B) or to separately present it. When it does not contain the blocked polyisocyanate, curing properties are insufficient and adhesion powder to the intermediate or top coat film decreases. When the dissociation temperature of blocked polyisocyanate is less than 100 °C, fluidity of the coating is extremely inferior and smoothness of flat part decreases. It also presents problem to composition stability. On the other hand, when the dissociation temperature exceeds 140 °C, fusion viscosity greatly decreases when the coated film is baked to cure at the temperature above 160 °C and fluidity of the coating becomes excessive and covering of the edge portion becomes insufficient. When the coated film is baked at a temperature of below 160 °C, curing properties becomes generally insufficient.

The blocked polyisocyanate having a dissociation temperature of 100 to 140 °C can be any polyisocyanates used as vehicle components for electrocoating compositions, but for low temperature curing, it is necessary to choose proper blocking agent. Examples of the polyisocyanates are aliphatic compounds (such as, trimethylene diisocyanate, tetramethylene diisocyanate, pentamethylene diisocyanate, hexamethylene diisocyanate, 1,2-propylene diisocyanate, 1,2-butylene diisocyanate, 2,3-butylene diisocyanate, 1,3-butylene diisocyanate, ethylidene diisocyanate, butylidene diisocyanate, etc.), alicyclic compounds (such as, 1,3-cyclopentane diisocyanate, 1:4-cyclohexane diisocyanate, 1,2-cyclohexane diisocyanate, etc.), aromatic compounds (such as, m-phenylene diisocyanate, p-phenylene diisocyanate, 4,4'-diphenyl diisocyanate, 1,5-naphthalene diisocyanate, 1,4-naphthalene diisocyanate, etc.), aliphatic-aromatic compounds (such as 4,4'-diphenylmethane diisocyanate, 2,4-or 2,6-toluene diisocyanate or their mixture, 4,4'-toluidine diisocyanate, 1,4-xylene diisocyanate etc.), nucleus-substituted aromatic compounds (such as, dianicidine diisocyanate, 4,4'-diphenylether diisocyanate, chlorodiphenyl diisocyanate etc.), triisocyanates (such as, triphenylmethane-4,4''-triisocyanate, 1,3,5-triisocyanate benzene, 2,4,6-triisocyanate toluene), tetraisocyanates (such as, 4,4'-diphenyl-dimethylmethane-2,2'-5,5'-tetraisocyanate etc.), polymerized polyisocyanates (such as, toluene diisocyanate dimer, toluene diisocyanate trimer etc.) and the like.

Blocking agents which dissociate at the temperature of 100 to 140 °C may co-exist with catalyst. Such blocking agent may be, for instance, in the case of aromatic polyisocyanate, halogenated hydrocarbons such as 1-chloro-2-propanol, ethylene chlorohydrin etc.; aliphatic or heterocyclic alcohols, such as n-propanol, furfuryl alcohol, alkyl group-substituted furfuryl alcohol etc.; phenols such as phenol, n-cresol, p-nitropehnol, p-chlorophenol, nonylphenol etc.; oximes, such as methylethylketone oxime, methylisobutylketone oxime, acetone oxime, cyclohexane oxime etc.; active methylene compounds, such as acetylacetone, ethyl acetoacetate, ethyl malonate etc.; and caprolactam and the like. Preferred are oximes and, among alcohols, furfuryl alcohol and alkyl group-substituted furfuryl alcohol. In the case of aliphatic polyisocyanate, phenols and oximes are preferred. The blocking agent which dissociates at 100 to 140 °C (hereinafter called "blocking agent (a)") may be used in a mixture with another blocking agent (b). The blocking agent (b) are those having a dissociation temperature below 160 °C, for instance, aliphatic alcohols, such as methanol, ethanol, isopropanol etc.; aromatic alcohols, such as benzyl alcohol; ethers such as ethylene glycol monomethyl ether, ethylene glycol monoethyl ether, ethylene glycol monobutyl ether, diethylene glycol monomethyl ether and the like. The method of mixing of the blocking agent (b) may be either a method wherein the blocking agents (a) and (b) are preliminary mixed in a certain amount ratio and then reacted with the polyisocyanate to block, or a method wherein a polyisocyanate blocked with the blocking agent (a) is mixed with a polyisocyanate blocked with the blocking agent (b). The ratio of mixing of blocking agent (a) and blocking agent (b) is preferred to be set in the range of (a):(b) = 10:0 to 10:5 by the ratio of equivalent.

A dissociation catalyst for the blocking agent may be organic tin compounds such as dibutyltin laurate, dibutyltin oxide, dioctyltin etc.; amines such as N-methylmorpholine; metal salts such as lead acetate etc. A concentration of the catalyst is usually 0.3 to 5 wt% based on the solid content of the film-forming resin components in the electrocoating composition.

An amount of the blocked polyisocyanate (c) in the total composition is within the range of 10 to 50 wt%, preferably 15 to 40 wt%, based on the solid content of the electrocoating composition. When if is less than 10 wt%, curing properties becomes inferior and when it is over 50 wt%, large amount of detachments generates at the time of baking of the coating, resulting in the decrease of smoothness of coating, generation of large amount of tar and smoke etc. which may cause public pollution.

The electrocoating composition of the present invention may preferably contain cationic micro resin particles (D).

Such cationic micro resin particles are disclosed in Japanese Kokai Publications Sho 63(1988)-63761, Sho 63(1988)-137745, Sho 64(1989)-65173, Sho 63(1988)-171637 and Hei 2(1990)-103273 etc. but for the composition of the present invention, the post-emulsified internally crosslinked micro resin particles which are described in Japanese Kokai Publications Sho 63(1988)-137745 and Sho 64(1989)-65173 are most preferred in regard to the covering properties of at the edge portion and bath stability of the cationic electrocoating composition. What should be particularly mentioned here is that the inventors have discovered that the introduction of the post-emulsified internally crosslinked micro resin particles into the composition improves the covering properties of the coating at the edge portions when producing the equivalent smoothness of the coating at the flat section. The reason for such synergistic effect is unclarified, but it is considered to be due to the fact that the effect of the increase of fusion viscosity of the post-emulsified internally crosslinked micro resin particles and the effect of the decrease of surface tension of the component (A) appear simultaneously.

An amount of the non-gelled resin in the component (A) in the composition may be within the range of 20 to 70 wt%, preferably 30 to 60 wt% based on the solid content of the resin components in the cationic electrocoating composition. When it is less than 20 wt%, it does not produce the effect of improving covering property of the coating at the edge portion of the article and if it exceeds 70 wt%, inferior curing and decrease of adhesion to the intermediate coat and top coat would occur. The content of the resin (B) may be 10 to 65 wt%, preferably 20 to 60 wt% based on the solid content of the resin components of the composition. When it is less than 10 wt%, adhesion and corrosion resistance of the coating decreases. If it exceeds 65%, covering properties of the coating at the edge portion of the coated articles decreases. An amount of the post-emulsified internally crosslinked micro resin particles (D) may be within the range of 3 to 30 wt%, preferably 5 to 25 wt% based on the solid resin content of the composition. When it is less than 3 wt%, fusion viscosity of the paint film becomes too small and when it exceeds 30 wt%, fusion viscosity of the paint film becomes too large and in either case, synergistic effect of compounding of post-emulsified internally bridged fine resin granules is lost.

The cationic electrocoating composition of the present invention may contain, upon necessity, the following additives, solvents and pigments in addition to the aforesaid components and water which is used for the medium.

Additive: Additives to be used to disperse may be acids, such as formic acid, acetic acid, lactic acid and sulfaminic acid, and a surfactant. A preferred concentration of additives is usually 0.1 to 15 wt% based on the solid resin content in the composition.

Solvents: the solvents are those used for the purpose of dissolution of resins and adjustment of viscosity of the coated film, etc., for instance, hydrocarbons such as xylene and toluene; alcohols such as ethyl alcohol, n-butyl alcohol, isopropyl alcohol, 2-ethylhexyl alcohol, ethylene glycol, propylene glycol etc.; ethers such as ethylene glycol monoethyl ether, ethylene glycol monobutyl ether, ethylene glycol monohexyl ether, propylene glycol monoethyl ether, 3-methyl 3-methoxybutanol, diethylene glycol monoethyl ether, diethylene glycol monobutyl ether; ketones such as methyl isobutyl ketone, cyclohexanone, isophorone, acetyl acetone etc.; esters such as ethylene glycol monoethylether acetate, ethyleneglycol monobutyl ether acetate; a mixture thereof; and the like. A concentration of the solvent may be within the range of about 0.01 to 25 wt%, preferably 0.05 to about 15 wt%, based on the solid resin content of the electrocoating composition.

Pigment: Coloring pigment such as carbon black, graphite, titanium oxide, zinc oxide, etc.; extender pigment such as aluminum silicate, kaolin etc.; corrosion resistant pigment such as strontium chromate, basic lead silicate, basic lead sulfate, aluminum molybdate; a mixture thereof; and the like. The pigment concentration in the electrocoating composition is preferred to be less than 30 wt% based on the total solid content of the electrocoating composition.

In the present invention, the electrodeposition coating is conducted under the normal conditions, e.g., a paint bath temperature of 20 to 40 °C, an applied voltage of 50 to 500 V, an electrification time of 30 sec. to 10 min. under the conditions where the article to be coated is completely immersed in the paint bath.

The necessary thickness of electrodeposited film may be 5 to 50 µm, preferably 10 to 35 µm in the dried state.

Under the present invention, baking of the electrodeposited film may be conducted at 100 to 200 °C, preferably at 110 to 180 °C, normally for 5 to 50 minutes.

The materials to which the method of present invention may be applied are those to which electrocoating has been usually applied, i.e. metals, such as iron, copper, zinc-plated material, aluminum and their alloys. The materials may be chemically treated.

The present invention is described in further details in reference to Examples. In the examples, unless otherwise indicated, % and parts are by weight.

## EXAMPLES

### Examples of preparation of polyepoxide (a) of the Composition (A)

980 wt parts of diglycldyl ether of bisphenol A with epoxy equivalent of 490, and 288 wt parts of dimer acid of carboxyl equivalent of 288 were charged in a vessel and heated to 150 °C. To the content, 0.8 wt part of dimethylbenzylamine was added and heated again to 170 °C to react for 4 hrs., It was subsequently cooled to 120 °C and diluted by 224 wt parts of ethylene glycol monoethyl ether to obtain a polyepoxide (a) modified by dimer acid having an epoxy equivalent of 1492 and a non-volatile content of about 85 wt%.

### Example of manufacture of reaction products (b) to (d) of polyepoxide - polyoxyalkylene polyamine

### Example of preparation of (b)

1492 wt parts of polyepoxide (a) was charged in a reaction vessel and heated to 90 °C. To the content, 263 wt parts of polyoxypropylene diamine having an amine equivalent of 210 was added and after completion of mixing, heated to 130 °C and reaction was continued for 5 hrs., to obtain the reaction product (b) containing about 87.2 wt% of non-volatile component.

### Example of manufacture of (c)

1492 wt parts of polyepoxide (a) was charged in the reaction vessel and heated to 90 °C. To the content, 326 wt parts of polyoxypropylene diamine having an amine equivalent of 210 was added for 20 minutes and, subsequent to the completion of mixing, the mixture was heated to 130 °C for 5 hrs. to obtain the reaction product (c) having a non-volatile content of about 87.7 wt%.

### Example of manufacture of (d)

1492 wt parts of polyepoxide (a) was charged in a reaction vessel and heated to 90 °C. To the content, 357 wt parts of polyoxypropylene diamine having an amine equivalent of 210 was added for 20 minutes and, subsequent to the completion of mixing, reaction temperature was raised to 130 °C and reaction was continued for 5 hrs., to obtain the reaction product (d) having a non-volatile content of about 87.9 wt%.

### Example of preparation of blocked polyisocyanate (e) to (g) of composition (c)

### Preparation of blocked polyisocyanate (e)

87 wt parts of methylethyl ketone oxime was gradually dropped into 174 wt parts of toluene diisocyanate (80/20 mixture of 2,4-toluene diisocyanate/2,6-toluene diisocyanate: TDI) charged in a reaction vessel, while keeping the reaction temperature at less than 50 °C by cooling from outside to obtain half-blocked isocyanate. Subsequently, 45 wt parts of trimethylolpropane and 0.05 wt part of dibutyltin dilaurate were added and reacted at 90 °C for 150 min. The obtained reaction product was diluted by 131 wt parts of ethylene glycol monoethyl ether to obtain a fully blocked polyisocyanate (e) having a non-volatile content of about 70%.

Preparation of blocked polyisocyanate (g)

30.5 wt parts of methylethylketone oxime was gradually dropped into 174 wt parts of toluene diisocyanate (80/20 mixture of 2,4-toluene diisocyanate/2,5-toluene diisocyanate) charged in a reaction vessels while keeping the reaction temperature at less than 50 °C by cooling from outside to let the mixture react completely. Subsequently, 60.9 wt parts of furfuryl alcohol was completely reacted therewith in the same manner and further 35.4 wt parts of ethyleneglycol monobutyl ether was reacted in the same manner to obtain a half-blocked isocyanate. Next, 45 wt parts of trimethylolpropane and 0.05 wt part of dibutyltin dilaurate were added thereto to cause reaction at 90 °C for 150 minutes. The obtained reaction product was diluted with 148 wt parts of ethylene glycol monoethyl ether to obtain a fully blocked polyisocyanate (f) having a non-volatile content of about 70%.

Preparation of blocked polyisocyanate (g)

118 wt parts of ethylene glycol monobutyl ether was gradually dropped into 174 wt parts of toluene diisocyanate (80/20 mixture of 2,4-toluene diisocyanate/2,6-toluene diisocyanate) charged in a reaction vessel, while keeping the reaction temperature at less than 50 °C by cooling from outside to obtain half-blocked diisocyanate. Subsequently 45 wt parts of trimethylolpropane and 0.05 wt parts of dibutyltin dilaurate were added thereto and reaction was continued for 90 minutes at 120 °C. The obtained reaction product was diluted with 144 wt parts of ethylene glycol monoethyl ether to obtain the fully blocked polyisocyanate (g) having a non-volatile content of about 70%.

Example of preparation of the mixtures (X) 1 to 5 of compositions (A) (a) to (d) and compositions (C) (e) to (f)

Example of preparation of mixture (X) 1

500 wt parts of the reaction product (b) of polyepoxide-polyoxyalkylene polyamine was charged in a vessel, temperature was adjusted to 80 °C, 267 wt parts of blocked polyisocyanate (e) was mixed therewith. The mixture was stirred for 30 minutes, neutralized with 15 wt parts of glacial acetic acid and diluted with 1295 wt parts of deionized water to obtain the mixture (X) 1 having non-volatile content of about 30 wt%.

Example of preparation of mixture (X) 2

Except that the blocked polyisocyanate (f) was used, the manufacture was conducted in the same manner with the same compounding amount as the case of the mixture (X) and the mixture (X) 2 having a non-volatile content of about 30 wt% was obtained.

Example of preparation of mixture (X) 3

Except that blocked polyisocyanate (g) was used, the manufacture was conducted in the same manner and with the same compounding amount as the case of the mixture (X) 1 and the mixture (X) 3 having a non-volatile content of about 30 wt% was obtained.

Example of preparation of mixture (X) 4

497 wt parts of reaction product (C) of polyepoxide-polyoxyalkylene polyamine was charged in a vessel, the temperature was adjusted to 80 °C, 267 wt parts of blocked polyisocyanate (e) was mixed with it. The mixture was stirred for 30 minutes, neutralized by 15 wt parts of glacial acetic acid and diluted with 1297 wt parts of deionized water to obtain the mixture (X) 4 having a non-volatile content of about 30 wt%.

Example of preparation of mixture (X) 5

496 wt parts of the reaction product (d) of polyepoxide-polyoxyalkylene polyamide was charged in a vessel, temperature was adjusted to 80 °C, 267 wt parts of blocked polyisocyanate (e) was mixed therewith. The mixture was stirred for 30 min., neutralized with 15 wt parts of glacial acetic acid and diluted with 1299 wt parts of deionized water, to obtain the mixture (X) 5 having a non-volatile content of about 30

wt%.

Example of preparation of other cationic resins (h) (i) and Example of preparation of their mixtures (Y) 1 to 4 with compositions (e) (f) (g)

Example of preparation of another cationic resin (h) of composition (B) and example of preparation of mixture

While keeping 1000 wt parts of glycidyl ether of bisphenol A (epoxy equivalent 910) under stirring to keep temperature at 70 °C , it was dissolved in 463 wt parts of ethylene glycol monoethyl ether, to which 80.3 wt parts of diethylamine was added. The mixture was caused to react for 2 hrs. at 100 °C to prepare amine-epoxy addition product to obtain another cationic resin (h). The mixture containing 1000 wt parts of thus obtained cationic resin and 400 wt parts of blocked polyisocyanate (e) was neutralized with 30 wt parts of glacial acetic acid and diluted with 1020 wt parts of deionized water to obtain a mixture (X) 1 having a non-volatile content of about 40 wt%.

Example of preparation of mixture (X) 2

A mixture containing 1000 wt parts of another cationic resin (h) and 400 wt parts of blocked polyisocyanate (f) was neutralized with 30 wt parts of glacial acetic acid and diluted with 1020 wt parts of deionized water to obtain a mixture (Y) 2 having a non-volatile content of about 40 wt%.

Example of preparation of mixture (Y) 3

Except that blocked polyisocyanate (g) was used, the preparation was conducted by the same method with the same amount of compounding as in the Example of preparation (Y) 2 to obtain the mixture (Y) 3 having a non-volatile content of about 40 wt%.

Example of preparation of composition (B), another cationic resin (i) and mixture (Y) 4

329 wt parts of ethylene glycol monoethyl ether was added to 1000 wt parts of epoxidated liquid polybutadiene (epoxidated polybutadiene preparation by Nippon Petrochemical Co.: average molecular weight 1000, content of oxirane oxygen 8.0%), keeping temperature at 80 °C to dissolve the former, further 375 wt parts of N-methylethanolamine was added. The mixture was reacted for 9 hrs. at 150 °C to obtain the composition (b) which is another cationic resin (i). Subsequently it was cooled to 80 °C, added with 600 wt parts of blocked polyisocyanate (e), stirred for 30 min. and then cooled to 50 °C.

The resulting mixture was neutralized with 90 wt parts of glacial acetic acid and diluted with 2094 wt parts of deionized water to obtain a mixture (Y) 4 containing about 40 wt% of non-volatile component.

Example of preparation of (D) post-emulsified internally bridged fine resin granules

Nippon Oil Polybutadiene B-2000 (average molecular weight 2,000; 1,2-bond is 65%) was epoxidated by peracetic acid to obtain an epoxidated polybutadiene containing oxirane oxygen 6.4 %.

1000 g of the obtained epoxidated polybutadiene and 354 of ethylcellosolve were charged in 2 liter autoclave, to which 62.1 g of diethylamine was added and the mixture was reacted for 5 hrs. at 150 °C. Unreacted amine was distilled off to obtain aminated polybutadiene resin liquid. The amine value of the obtained compound was 120 m mol/100 g (solid). Non-volatile content was 75%. Subsequently, 625 wt parts (non-volatile content 80%) of resole type phenolic resin preparation by Arakawa Chemical Industries Ltd. was mixed with 667 wt parts of aminated polybutadiene resin and the mixture was stirred, neutralized with 20 wt part of glacial acetic acid, emulsified with 3688 wt parts of deionized water, heated for 5 hrs. at 100 °C, to obtain post-emulsified internally crosslinked micro resin particles having a non-volatile component of 20 %. When a part of the liquid in which the above particles were dispersed was added to tetrahydrofuran of the amount 100 times as much as the former, the particles did not dissolve but the mixture became turbid white.

Example of preparation of pigment paste

270 wt parts of another cationic resin (h) of the composition (B), 1.6 weight parts of glacial acetic acid, 200 wt parts of titanium oxide, 40 wt parts of basic lead silicate, 20 wt parts of carbon black, 10 wt parts of dibutyltin oxide and 404 wt parts of deionized water were mixed together and the mixture was dispersed for 3 hrs. by a disperser using 1000 wt parts of glass beads. The glass beads were removed to obtain the pigment paste having a non-volatile content of about 40 wt%.

Example of preparation of cationic electrodeposition paint compositions 9 to 21

According to the amount ratio of Table 1, pure water was charged in a stainless steel vessel 1, and the aforesaid mixture (X) was mixed therewith under stirring, followed by mixing of mixture (Y) and upon necessity post-emulsified internally crosslinked micro resin particles (D). Subsequently, the pigment paste was mixed under agitation, to obtain a cationic electrocoating compositions 9 to 21 having a non-volatile content of 20 wt%.

Table 1 (Preparation of cationic electrocoating compositions 9 to 21)

| Cationic composition | 9 | 10 | 11 | 12 | 13 | 14 | 15 | 16 | 17 | 18 | 19 | 20 | 21 |
|---|---|---|---|---|---|---|---|---|---|---|---|---|---|
| Deionized water | 1733 | 1733 | 1733 | 1733 | 1733 | 1733 | 1809 | 1542 | 1885 | 1573 | 1413 | 1207 | 1200 |
| Number of mixture (X) and amount | 1<br>1067 | 1<br>1067 | 4<br>1067 | 5<br>1067 | 2<br>1067 | 3<br>1067 | 1<br>763 | 1<br>1830 | 1<br>457 | 1<br>1067 | 1<br>747 | 1<br>610 | |
| Number of mixture (Y) and amount | 1<br>640 | 4<br>640 | 1<br>640 | 1<br>640 | 2<br>640 | 3<br>640 | 1<br>868 | 1<br>68 | 1<br>1098 | 1<br>480 | 1<br>480 | 1<br>343 | 1<br>640 |
| Amount of Composition (D) | | | | | | | | | | 320 | 800 | 1280 | 1600 |
| Pigment paste | 560 | 560 | 560 | 560 | 560 | 560 | 560 | 560 | 560 | 560 | 560 | 560 | 560 |
| Total | 4000 | 4000 | 4000 | 4000 | 4000 | 4000 | 4000 | 4000 | 4000 | 4000 | 4000 | 4000 | 4000 |

Numbers in Table 1 show parts by weight.

Method of preparation of coated panel

A cationic electrocoating composition 9 to 21 obtained in the aforesaid process was coated on the following test panel under the following conditions to prepare a coated panel specimen.

(1) Test specimen;1. Cold-rolled steel plate produced by Nippon Test Panel Industries Ltd. (for evaluation of appearance of top coat).

2. Cutter knife blade LB-10 produced by Orpha Corp. (for evaluation of anti-corrosion effect at end face).

(2) Surface treatment; Surfcleaner 53 and Surfdine DP-4000 produced by Nippon Paint Co. Ltd.

(3) Electrocoating; Bath temp., 28 to 30 °C, electrification conditions 150 to 250 V X 3 min., baking at 150 °C or 180 °C for 20 min., thickness of coated film 20 µm.

(4) Top coat; Alkyd-melamine-based white solid color preparation by Nippon Paint Co. Ltd.

Baking at 140 °C for 20 min.

Thickness of coated film 40 µm

Example and Comparative Example

Aforesaid coated panels were coated by the electrodeposition paint compositions 9 to 21 having different composition under the aforesaid coating conditions and the specimens were numbered as Example 1 to 9 and Comparative Examples 1 to 5 for evaluation.

Method of evaluation of coated panel corrosion-resistant effect at edge portion

A salt water spray test according to JIS Z-2371 was applied to cutter knife blade electrocoated for 168 hrs. and the number of rust spots on the blade was counted.

(Evaluation)

| Number of rust spots | Rank | |
|---|---|---|
| 0 to 5 | +3 | Qualified |
| 6 to 15 | +2 | Qualified |
| 16 to 30 | +1 | Qualified |
| 31 to 50 | -1 | Disqualified |
| 51 to 80 | - 2 | Disqualified |
| Over 81 | - 3 | Disqualified |

Appearance of top coat

Sharpness was measured by sharpness measuring instrument (PGD meter of Tokyo Koden K.K.) with the painted panel specimen coated with top coat.

(Evaluation)

| PGD | Rank | |
|---|---|---|
| 0.46 to 0.50 | +3 | Qualified |
| 0.41 to 0.45 | +2 | Qualified |
| 0.36 to 0.40 | +1 | Qualified |
| Less than 0.35 | - 1 | Disqualified |

Overall evaluation

The cases which indicate ranks in positive number for both edge corrosion resistance and appearance of top coat were rated "Good". When either of the two factors indicate negative number, the case was rated "Bad".

Table 2

| | Number of cationic electrocoating composition | Equivalent ratio of epoxy group : amine group | Dissociation temperature of blocked polyisocyanate | Solid content (% by weight) of Composition (A) | Solid content (% by weight) of Composition (B)* |
|---|---|---|---|---|---|
| Example 1 | 9 | 1:1.25 | 110 | 35 | 39 |
| Example 2 | 10 | 1:1.25 | 110 | 35 | 41 |
| Example 3 | 11 | 1:1.55 | 110 | 35 | 39 |
| Comp. Ex. 1 | 12 | 1:1.70 | 110 | 35 | 39 |
| Example 4 | 13 | 1:1.25 | 135 | 35 | 39 |
| Comp. Ex. 2 | 14 | 1:1.25 | 155 | 35 | 39 |
| Comp. Ex. 3 | 14 | 1:1.25 | 155 | 35 | 39 |
| Example 5 | 15 | 1:1.25 | 110 | 25 | 49 |
| Example 6 | 16 | 1:1.25 | 110 | 60 | 13 |
| Comp. Ex. 4 | 17 | 1:1.25 | 110 | 15 | 59 |
| Example 7 | 18 | 1:1.25 | 110 | 35 | 31 |
| Example 8 | 19 | 1:1.25 | 110 | 25 | 31 |
| Example 9 | 20 | 1:1.25 | 110 | 20 | 25 |
| Comp. Ex. 5 | 21 | 1:1.25 | 110 | - | 39 |

Solid contents in Table 2 count fractions of .5 and over as a unit and cut away the rest.

* Containing the dispersion resin (another cationic resin) in the pigment paste

Table 2 continue

| | Solid content (% by weght) of Composition (C) | Solid content (% by weight) of Component (D) | Solid content (% by weight) of pigment | Baking temperature of the coating | Edge corrosion resistance | Appearance of top coat | Total evaluation |
|---|---|---|---|---|---|---|---|
| Example 1 | 26 | - | 25 | 150 | +2 | +2 | Good |
| Example 2 | 24 | - | 25 | 150 | +2 | +2 | Good |
| Example 3 | 26 | - | 25 | 150 | +2 | +2 | Good |
| Comp. Ex. 1 | 26 | - | 25 | 150 | -1 | +2 | Bad |
| Example 4 | 26 | - | 25 | 150 | +2 | +2 | Good |
| Comp. Ex. 2 | 26 | - | 25 | 150 | -2 | -1 | Bad |
| Comp. Ex. 3 | 26 | - | 25 | 180 | -1 | +2 | Bad |
| Example 5 | 26 | - | 25 | 150 | +1 | +2 | Good |
| Example 6 | 27 | - | 25 | 150 | +2 | +1 | Good |
| Comp. Ex. 4 | 26 | - | 25 | 150 | -3 | +3 | Bad |
| Example 7 | 24 | 10 | 25 | 150 | +3 | +2 | Good |
| Example 8 | 19 | 25 | 25 | 150 | +3 | +2 | Good |
| Example 9 | 15 | 40 | 25 | 150 | +3 | +1 | Good |
| Comp. Ex. 5 | 11 | 50 | 25 | 150 | +2 | -1 | Bad |

## Claims

**1.** A cationic electrocoating composition comprising:

(A) 20 to 70 wt% of a cationic non-gelled resin obtained by neutralizing with acid a reaction product of a polyepoxide and a polyoxyalkylene polyamine in an equivalent ratio of epoxy group in the polyepoxide against amine group in the polyoxyalkylene polyamine being within the range of 1:1.15 to 1.60,

(B) 10 to 65 wt% of a cationic resin other than said cationic non-gelled resin (A), and
(C) 10 to 50 wt% of a blocked polyisocyanate having a dissociation temperature of 100 to 140 °C;
the wt% being based on the total solid content.

2. The cationic electrocoating composition according to Claim 1 wherein said polyepoxide is a polyglycidyl ether of a polyvalent alcohol.

3. The cationic electrocoating composition according to Claim 1 wherein said polyepoxide is a dimer acid modified polyepoxide.

4. The cationic electrocoating composition according to Claim 1 wherein said polyoxyalkylene polyamine is a diamine having the following structural formula:

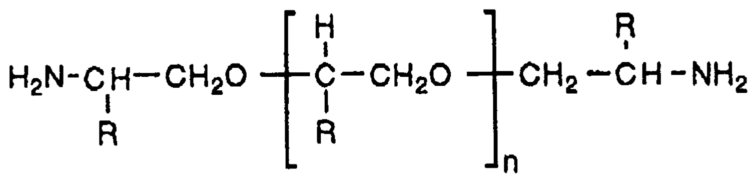

wherein R, which may be same or different, is selected from the group consisting of hydrogen and a lower alkyl group having 1 to 6 carbon atoms. n is an integral of about 1 to 30.

5. The cationic electrocoating composition according to Claim 1 wherein said polyoxyalkylene polyamines is a polyoxyethylene-propylene polyamine having the following structural formula:

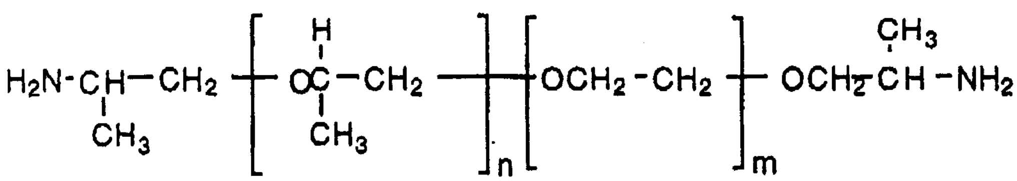

wherein n + m is 1 to 30, m is 1 to 29 and n is 1 to 22.

6. The cationic electrocoating composition according to Claim 1 wherein said polyalkylene polyamine has a number average molecular weight of 110 to 1,500 and an amine equivalent of 55 to 750.

7. The cationic electrocoating composition according to Claim 1 wherein said reaction product of the polyepoxide and the polyoxyalkylene polyamine has essentially no epoxy functionality.

8. The cationic electrocoating composition according to Claim 1 wherein said cationic resin (B) is selected from the group of epoxy based resin, polybutadiene-based resin and acryl-based resin.

9. The cationic electrocoating composition according to Claim 1, which further comprises (D) cationic micro resin particles.

10. The cationic electrocoating composition according to Claim 4 wherein said cationic micro resin particles (D) are present in an amount of 3 to 30 wt%, based on the solid resin content of the electrocoating composition.

11. A coated article comprising a substrate and a cured film obtained from the electrocoating composition according to Claim 1.

12. A process for producing the coated article according to Claim 11, electrocoating a substrate with the electrocoating composition according to Claim 1.